# EUROPEAN PATENT SPECIFICATION

(11) **EP 2 105 586 B1**
(45) Date of publication and mention of the grant of the patent: **10.08.2011**
(21) Application number: 09250696.3
(22) Date of filing: 12.03.2009
(51) Int. Cl.: F01N 1/00, B62K 19/30

(54) **Muffler fixing bracket and straddle type vehicle including the same**
Dämpferbefestigungshalterung und Grätschsitzfahrzeug damit
Support de fixation de silencieux et véhicule de type à enfourcher le comprenant

(30) Priority: 28.03.2008 JP 2008086455
(43) Date of publication of application: 30.09.2009
(73) Proprietor: Yamaha Hatsudoki Kabushiki Kaisha, Iwata-shi, Shizuoka 438-8501 (JP)
(72) Inventor: Ikeda, Kota, Iwata-shi, Shizuoka-ken 438-8501 (JP)
(74) Representative: Lamb, Martin John Carstairs

(56) References cited:
- EP-A- 1 701 009
- DE-A1-102004 048 246

## Description

### FIELD OF THE INVENTION

The present invention relates to a muffler fixing bracket and a straddle type vehicle including the same.

### BACKGROUND TO THE INVENTION

Muffler fixing brackets of various structures are known. FIG. 11 is a right side view expressing a structure of a muffler fixing bracket 100 disclosed in JP-A-2005-112308. As shown in FIG. 11, the muffler fixing bracket 100 is formed generally in the shape of a triangle in a side view. The muffler fixing bracket 100 has an opening 101 formed generally in a center part thereof. The muffler fixing bracket 100 is provided with a first engine side fixing part 103 and a second engine side fixing part 104 that are fixed on an engine 102 respectively. Further, the muffler fixing bracket 100 is provided with a first muffler side fixing part 106, a second muffler side fixing part 107, and a third muffler side fixing part 108 that are fixed on a muffler 105 respectively.

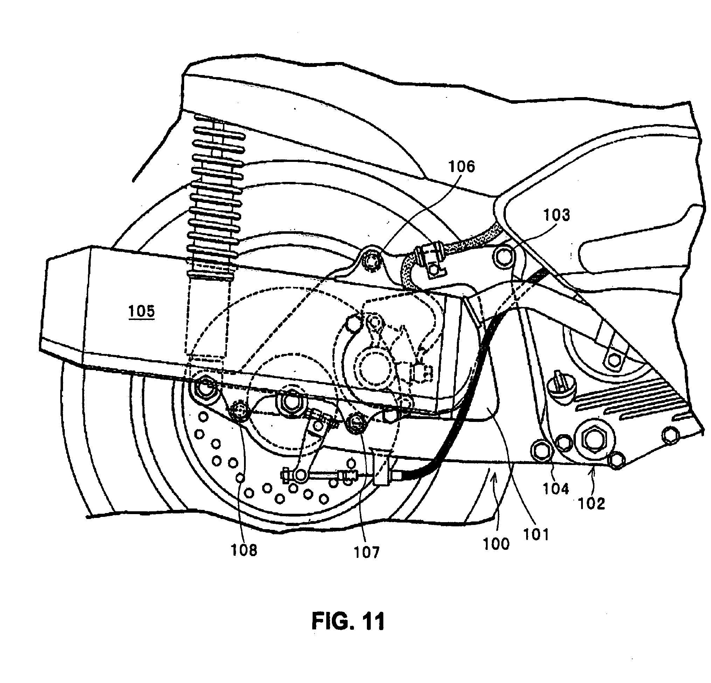

The opening 101 is formed generally in the center part as in the muffler fixing bracket 100 shown in FIG. 11. Consequently, it can be attempted to reduce weight of the muffler fixing bracket 100.

However, when the opening 101 is formed generally in the center part as in the muffler fixing bracket 100, the first muffler side fixing part 106 is supported practically only by the first engine side fixing part 103. The second engine side fixing part 104 does not very much or significantly contribute to supporting the first muffler side fixing part 106. Further, the second muffler side fixing part 107 is supported practically only by the second engine side fixing part 104. The first engine side fixing part 103 does not very much or significantly contribute to supporting the second muffler side fixing part 107. Therefore, the muffler fixing bracket 100 has a structure whose rigidity is relatively weak against force in a twisting direction around an axis extending in the longitudinal direction of the vehicle. Consequently, it is necessary, for example, to increase thickness of a wall of the muffler fixing bracket 100 to ensure the rigidity of the muffler fixing bracket 100. This causes a problem in which weight of the muffler fixing bracket 100 is increased.

### SUMMARY OF THE INVENTION

Aspects of the present invention are set forth in the independent claims. Optional features of the invention are set forth in the dependent claims.

A muffler fixing bracket according to an aspect of the present invention relates to a muffler fixing bracket that interconnectedly fixes, or interconnects, an engine and a muffler of a straddle type vehicle provided with the engine and the muffler connected to the engine.

The muffler fixing bracket according to the present invention is provided with a first engine side fixing part and a second engine side fixing part, a first muffler side fixing part and a second muffler side fixing part, a first connecting member, a second connecting member, and a third connecting member. The first engine side fixing part and the second engine side fixing part are fixed on the engine respectively. The first muffler side fixing part and the second muffler side fixing part are fixed on the muffler respectively. The first connecting member connects the first engine side fixing part to the first muffler side fixing part. The second connecting member connects the second engine side fixing part to the first muffler side fixing part. The third connecting member connects at least one of the first engine side fixing part, the second engine side fixing part, the first muffler side fixing part, the first connecting member, and the second connecting member to the second muffler side fixing part.

A straddle type vehicle according to an aspect of the present invention is provided with an engine, a muffler, and a muffler fixing bracket. The muffler is connected to the engine. The muffler fixing bracket interconnectedly fixes, or interconnects, the engine and the muffler. The muffler fixing bracket is provided with a first engine side fixing part and a second engine side fixing part, a first muffler side fixing part and a second muffler side fixing part, a first connecting member, a second connecting member, and a third connecting member. The first engine side fixing part and the second engine side fixing part are fixed on the engine respectively. The first muffler side fixing part and the second muffler side fixing part are fixed on the muffler respectively. The first connecting member connects the first engine side fixing part to the first muffler side fixing part. The second connecting member connects the second engine side fixing part to the first muffler side fixing part. The third connecting member connects at least one of the first engine side fixing part, the second engine side fixing part, the first muffler side fixing part, the first connecting member, and the second connecting member to the second muffler side fixing part.

According to the present invention, it can be attempted to reduce weight and to enhance rigidity of the muffler fixing bracket at the same time.

Within this specification, including the appended claims, a number of fixing parts and connecting members are defined. These different parts and members have been identified numerically, such as first connecting member, second connecting member, third connecting member etc. It should be understood that this is for convenience only and is not intended to limit the scope of the present invention. For example, the identification of an eighth connecting member does not immediately require first to seventh connecting members to be present, etc.

### BRIEF DESCRIPTION OF THE DRAWINGS

These and other aspects of the present invention will now be described, by way of example only, with reference to the accompanying drawings, in which:
FIG. 1 is a left side view of a motorcycle according to an embodiment of the present invention;
FIG. 2 is a right side view expressing a part of the motorcycle according to the embodiment;
FIG. 3 is a view expressing a bracket viewed from the right side in the width direction of the vehicle;
FIG. 4 is a view expressing the bracket viewed from the left side in the width direction of the vehicle;
FIG. 5 is a view expressing a bracket viewed from a lower direction;
FIG. 6 is a view taken along a line VI-VI in FIG. 4;
FIG. 7 is a plan view schematically expressing the bracket in the embodiment;
FIG. 8 is a plan view schematically expressing a bracket in a referential example;
FIG. 9 is a plan view schematically expressing a bracket in a first modified example;
FIG. 10 is a plan view schematically expressing a bracket in a second modified example;
FIG. 11 is a right side view expressing a structure of a muffler fixing bracket 100 disclosed in JP-A-2005-112308.

### DETAILED DESCRIPTION OF THE DRAWINGS

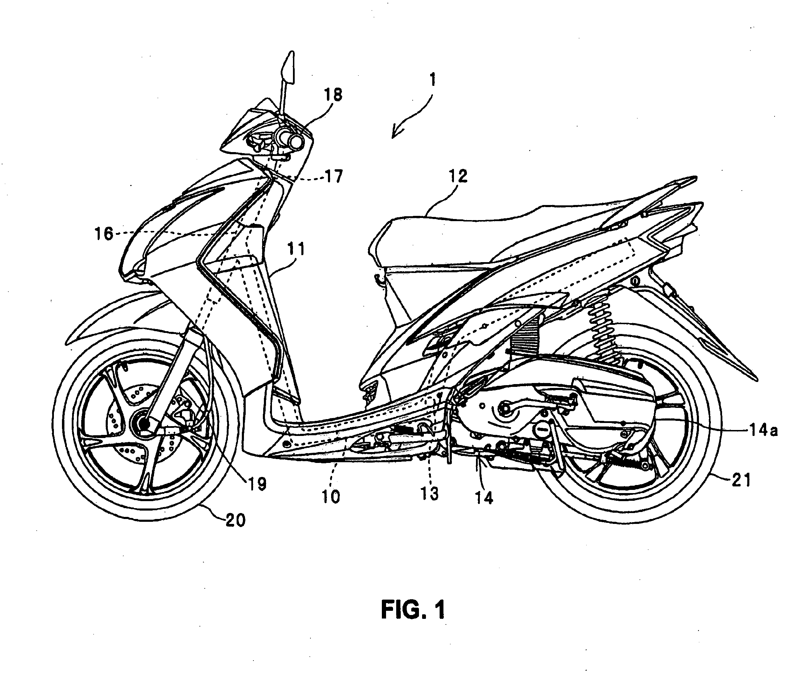

An example of an embodiment according to the present invention will be described hereinafter with reference to an example of a motorcycle 1 having a body frame of a so-called under bone type as shown in FIG. 1.

The motorcycle 1 shown in FIG. 1 is only an example. The straddle type vehicle according to the present invention is not limited to the motorcycle 1. The straddle type vehicle according to the present invention may be a vehicle other than a motorcycle. The straddle type vehicle according to the present invention may be, for example, an ATV (all terrain vehicle), a snowmobile or the like.

Further, the straddle type vehicle according to the present invention may be a motorcycle other than a motorcycle having a body frame other than an under bone type. The straddle type vehicle according to the present invention may be, for example, a moped, a motorcycle in a narrow sense, an off-road vehicle or the like. The "motorcycle" in the present invention is among vehicles at least one of whose front wheel and rear wheel is constituted with a plurality of wheels, and the "motorcycle" in the present invention may include vehicles that change a travelling direction of the vehicle by inclining the vehicle body. In other words, the "motorcycle" in the present invention refers to vehicles in general that change a travelling direction of the vehicle by inclining the vehicle body.

In the description below, directions such as front, rear, left, and right are directions viewed from an operator seated on a seat 12.

As shown in FIG. 1, the motorcycle 1 is provided with a body frame 10. The body frame 10 is a body frame of a so-called under bone type. The body frame 10 is provided with a head pipe 16.

The head pipe 16 has a steering shaft 17 rotatably inserted therein. The steering shaft 17 has a handlebar 18 and a pair of front forks 19 mounted thereon. The front forks 19 have a front wheel 20 rotatably mounted on a lower end thereof.

The body frame 10 has a vehicle body cover 11 and the seat 12 mounted thereon. Further, the body frame 10 has a pivot shaft 13 mounted thereon. The pivot shaft 13 has an engine 14 swingably mounted thereon. In other words, the engine 14 is an engine of a so-called unit swing type. The engine 14 is provided with a casing 14a for housing a crankshaft, a transmission mechanism, and so forth (not shown).

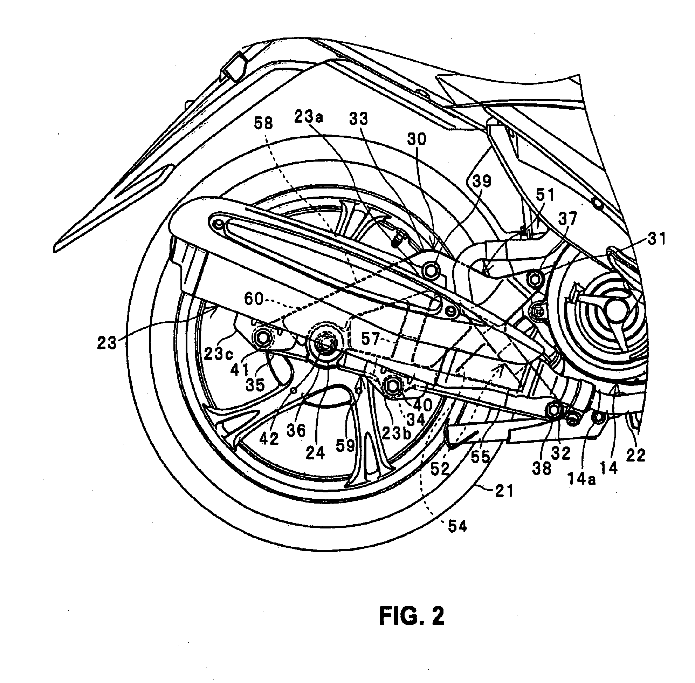

The engine 14 has an exhaust pipe 22 shown in FIG. 2 connected thereto. As shown in FIG. 2, the exhaust pipe 22 has a rear end connected to a muffler 23. The muffler 23 is disposed on the right side of a rear wheel 21. The muffler 23 extends obliquely upward and rearward.

In the embodiment, the muffler 23 is mounted on the casing 14a of the engine 14 and an axle 24 for the rear wheel 21 by a bracket 30.

In the embodiment, the bracket 30 is made of metal. Specifically, the bracket 30 is made of aluminum alloy. However, a material of the bracket 30 in the present invention is not particularly limited. For example, the bracket 30 may be formed of alloy and/or metal other than aluminum alloy. The bracket 30 may be formed of, for example, iron and/or stainless steel. Further, the bracket 30 may be made of resin and/or carbon.

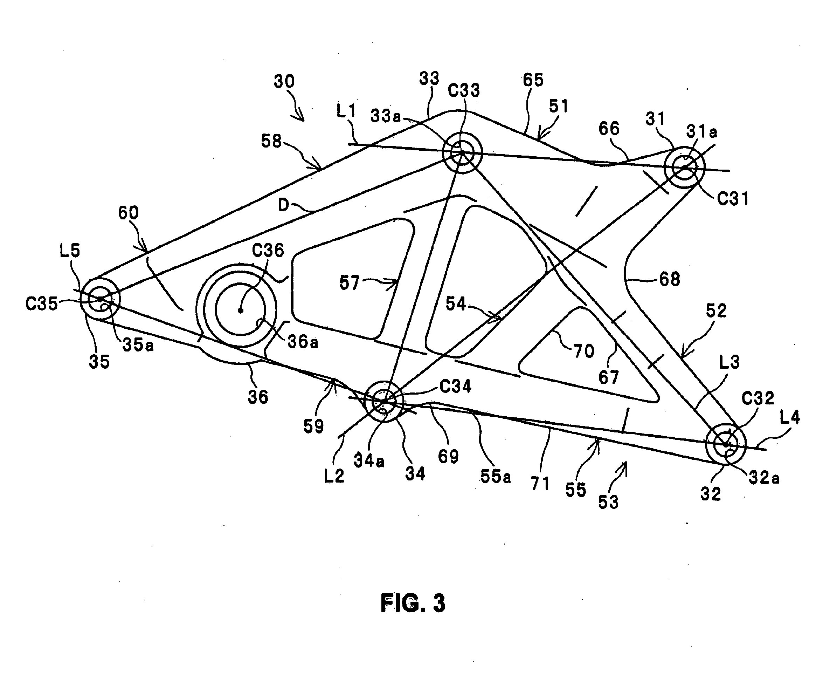

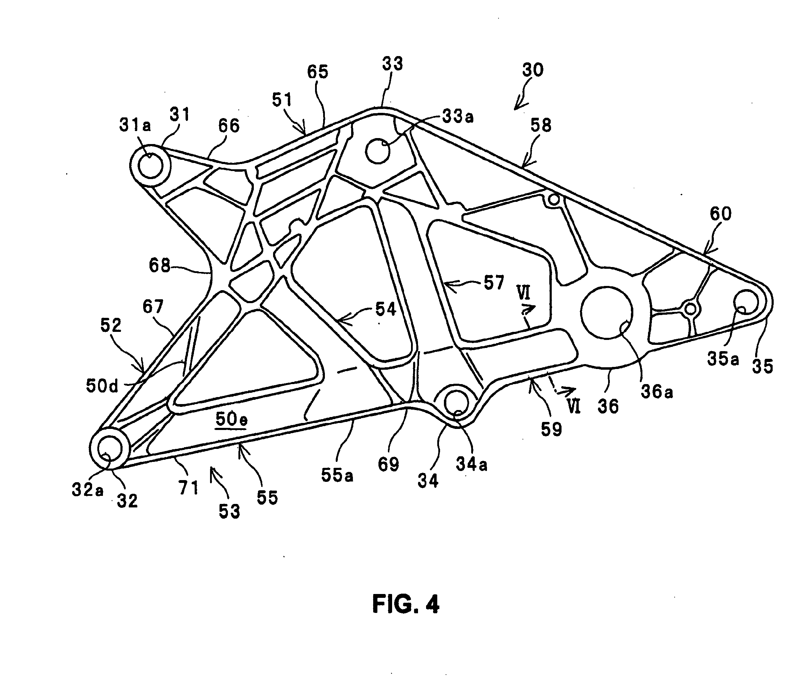

The bracket 30 is provided with a first engine side fixing part 31 and a second engine side fixing part 32. As shown in FIG. 3 and FIG. 4, the first engine side fixing part 31 has an opening 31a formed therein. As shown in FIG. 2, the first engine side fixing part 31 is fixed on the casing 14a by a bolt 37 inserted in the opening 31a.

As shown in FIG. 3 and FIG. 4, the second engine side fixing part 32 has an opening 32a formed therein. As shown in FIG. 2, the second engine side fixing part 32 is fixed on the casing 14a by a bolt 38 inserted in the opening 32a.

Further, the bracket 30 is provided with a first muffler side fixing part 33, a second muffler side fixing part 34, and a third muffler side fixing part 35. As shown in FIG. 3 and FIG. 4, the first muffler side fixing part 33 has an opening 33a formed therein. As shown in FIG. 2, the first muffler side fixing part 33 is fixed on an upper fixing part 23a of the muffler 23 by a bolt 39 inserted in the opening 33a.

As shown in FIG. 3 and FIG. 4, the second muffler side fixing part 34 has an opening 34a formed therein. As shown in FIG. 2, the second muffler side fixing part 34 is fixed on a first lower fixing part 23b of the muffler 23 by a bolt 40 inserted in the opening 34a.

As shown in FIG. 3 and FIG. 4, the third muffler side fixing part 35 has an opening 35a formed therein. As shown in FIG. 2, the third muffler side fixing part 35 is fixed on a second lower fixing part 23c of the muffler 23 by a bolt 41 inserted in the opening 35a.

Moreover, the bracket 30 is provided with an axle side fixing part 36. As shown in FIG. 3 and FIG. 4, the axle side fixing part 36 has an opening 36a formed therein. As shown in FIG. 2, the axle side fixing part 36 is fixed on the axle 24 by a bolt 42 inserted in the opening 36a.

The axle side fixing part 36 is disposed between the first muffler side fixing part 33 and the second muffler side fixing part 34 and the third muffler side fixing part 35 in the longitudinal direction. The axle side fixing part 36, the second muffler side fixing part 34, and the third muffler side fixing part 35 are generally linearly disposed. Specifically, as shown in FIG. 3, the axle side fixing part 36 has a center C36 thereof disposed in a position slightly higher than a line L5 that includes a center C34 of the second muffler side fixing part 34 and a center C35 of the third muffler side fixing part 35. When the axle side fixing part 36 is viewed from the width direction of the vehicle, the axle side fixing part 36 is disposed such that the center C36 of the axle side fixing part 36 is located in a triangle D constituted with the center C34 of the second muffler side fixing part 34, the center C35 of the third muffler side fixing part 35, and a center C33 of the first muffler side fixing part 33.

In this specification, the "center of a fixing part" refers to a center of an opening formed in the fixing part in which a fastening member such as a bolt is inserted. For example, the center C36 of the axle side fixing part 36 refers to the center of the opening 36a formed in the axle side fixing part 36.

As shown in FIG. 3, in the embodiment, the second engine side fixing part 32 is not disposed on a line L1 that includes a center C31 of the first engine side fixing part 31 and the center C33 of the first muffler side fixing part 33. The second engine side fixing part 32 is not disposed on a line L2 that includes the center C31 of the first engine side fixing part 31 and a center C34 of the second muffler side fixing part 34. Further, the first engine side fixing part 31 is not disposed on a line L3 that includes a center C32 of the second engine side fixing part 32 and the center C33 of the first muffler side fixing part 33. The first engine side fixing part 31 is not disposed on a line L4 that includes the center C32 of the second engine side fixing part 32 and the center C34 of the second muffler side fixing part 34. In other words, the first engine side fixing part 31, the second engine side fixing part 32, the first muffler side fixing part 33, and the second muffler side fixing part 34 are disposed such that three centers arbitrarily chosen from the four fixing parts are not linearly located. The first engine side fixing part 31, the second engine side fixing part 32, the first muffler side fixing part 33, and the second muffler side fixing part 34 are disposed such that the centers thereof are in the shape of a rectangle whose interior angles are smaller than 180 degrees when viewed from the width direction of the vehicle.

As shown in FIG. 2 and FIG. 3, the bracket 30 is provided with a first connecting member 51, a second connecting member 52, a third connecting member 53, an eighth connecting member 58, a ninth connecting member 59, and a tenth connecting member 60.

The first connecting member 51 connects the first engine side fixing part 31 to the first muffler side fixing part 33. The first connecting member 51 is disposed in a position different from the second engine side fixing part 32 and the second muffler side fixing part 34. In other words, the first connecting member 51 does not pass the second engine side fixing part 32 or the second muffler side fixing part 34 but directly connects the first engine side fixing part 31 to the first muffler side fixing part 33.

The second connecting member 52 connects the second engine side fixing part 32 to the first muffler side fixing part 33. The second connecting member 52 is disposed in a position different from the first engine side fixing part 31 and the second muffler side fixing part 34. In other words, the second connecting member 52 does not pass the first engine side fixing part 31 or the second muffler side fixing part 34 but directly connects the second engine side fixing part 32 to the first muffler side fixing part 33.

The first connecting member 51 and the second connecting member 52 are provided with a shared part 65 interconnectedly shared thereby. The first connecting member 51 is provided with the shared part 65 and a shared part 66. Here, the shared part 66 is a part shared by the first connecting member 51 and a fourth connecting member 54. The shared part 66 has a base end connected to the first engine side fixing part 31. The shared part 65 connects a top end of the shared part 66 to the first muffler side fixing part 33. The second connecting member 52 is provided with an independent part 67 and the shared part 65. The independent part 67 has a base end connected to the second engine side fixing part 32. A top end of the independent part 67 is connected to the second muffler side fixing part 34 by the shared part 65.

The third connecting member 53 connects at least one of the first engine side fixing part 31, the second engine side fixing part 32, the first muffler side fixing part 33, the first connecting member 51, and the second connecting member 52 to the second muffler side fixing part 34. Specifically, in the embodiment, the third connecting member 53 includes the fourth connecting member 54, a fifth connecting member 55, and a seventh connecting member 57.

The fourth connecting member 54 connects the first engine side fixing part 31 to the second muffler side fixing part 34. The fourth connecting member 54 is disposed in a position different from the second engine side fixing part 32 and the first muffler side fixing part 33. In other words, the fourth connecting member 54 does not pass the second engine side fixing part 32 or the first muffler side fixing part 33 but directly connects the first engine side fixing part 31 to the second muffler side fixing part 34.

The fourth connecting member 54 and the second connecting member 52 are disposed to cross each other when viewed from the width direction of the vehicle. In the embodiment, the fourth connecting member 54 and the second connecting member 52 are connected at a crossing part thereof. In other words, the fourth connecting member 54 and the second connecting member 52 are provided with an intersection 68 interconnected thereto.

The fifth connecting member 55 connects the second engine side fixing part 32 to the second muffler side fixing part 34. The fifth connecting member 55 is disposed in a position different from the first engine side fixing part 31 and the first muffler side fixing part 33. In other words, the fifth connecting member 55 does not pass the first engine side fixing part 31 or the first muffler side fixing part 33 but directly connects the second engine side fixing part 32 to the second muffler side fixing part 34.

The fifth connecting member 55 and the fourth connecting member 54 are provided with a shared part 69 interconnectedly shared thereby. The fifth connecting member 55 is provided with an independent part 71 and the shared part 69. The independent part 71 has a base end connected to the second engine side fixing part 32. The shared part 69 connects a top end of the independent part 71 to the second muffler side fixing part 34.

The fourth connecting member 54 is provided with the shared part 66 shared with the first connecting member 51, an independent part 70, and the shared part 69. The shared part 66 has a top end connected to the shared part 65 and also connected to a base end of the independent part 70. The independent part 70 is connected to a connecting part 55a of the independent part 71 and the shared part 69. The independent part 70 is connected to the second muffler side fixing part 34 by the shared part 69.

The seventh connecting member 57 connects the first muffler side fixing part 33 to the second muffler side fixing part 34. The seventh connecting member 57 is disposed in a position different from the first engine side fixing part 31 and the second engine side fixing part 32. In other words, the seventh connecting member 57 does not pass the first engine side fixing part 31 or the second engine side fixing part 32 but directly connects the first muffler side fixing part 33 to the second muffler side fixing part 34.

The eighth connecting member 58 connects the first muffler side fixing part 33 to the axle side fixing part 36. Specifically, the eighth connecting member 58 does not pass other fixing parts than the first muffler side fixing part 33 and the axle side fixing part 36 but directly connects the first muffler side fixing part 33 to the axle side fixing part 36.

The ninth connecting member 59 connects the second muffler side fixing part 34 to the axle side fixing part 36. Specifically, the ninth connecting member 59 does not pass other fixing parts than the second muffler side fixing part 34 and the axle side fixing part 36 but directly connects the second muffler side fixing part 34 to the axle side fixing part 36.

The tenth connecting member 60 connects the axle side fixing part 36 to the third muffler side fixing part 35. Specifically, the tenth connecting member 60 does not pass other fixing parts than the axle side fixing part 36 and the third muffler side fixing part 35 but directly connects the axle side fixing part 36 to the third muffler side fixing part 35.

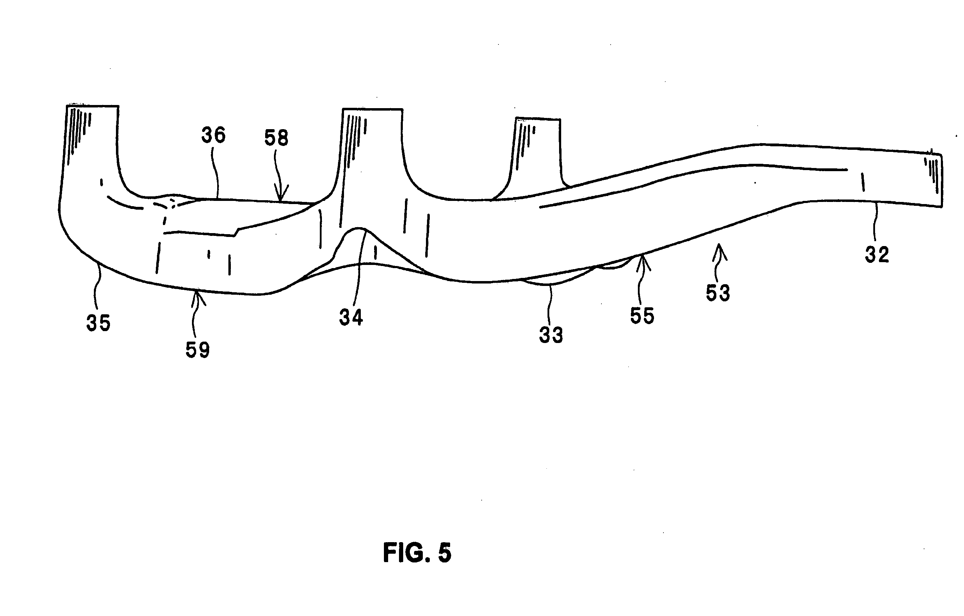

As shown in FIG. 5, at least one of the first connecting member 51 and the second connecting member 52 and the third connecting member 53, the eighth connecting member 58, the ninth connecting member 59 shown in FIG 4 and the tenth connecting member 60 shown in FIG. 4 is formed in a convex shape toward one side in the width direction of the vehicle when viewed from a lower direction. Consequently, at least one of the first connecting member 51 and the second connecting member 52 and the third connecting member 53, the eighth connecting member 58, the ninth connecting member 59 shown in FIG 4 and the tenth connecting member 60 shown in FIG. 4 is formed in a convex shape toward one side in the width direction of the vehicle in a plan view. In other words, at least one of the first connecting member 51, the second connecting member 52, the third connecting member 53, the eighth connecting member 58, the ninth connecting member 59, and the tenth connecting member 60 is formed to bend in the width direction of the vehicle in a plan view. Specifically, the fifth connecting member 55 and the ninth connecting member 59 are formed in a convex shape toward an outside in the width direction of the vehicle. On the other hand, the fourth connecting member 54 and the seventh connecting member 57 are formes in a convex shape toward an inside in the width direction of the vehicle, although this is not shown.

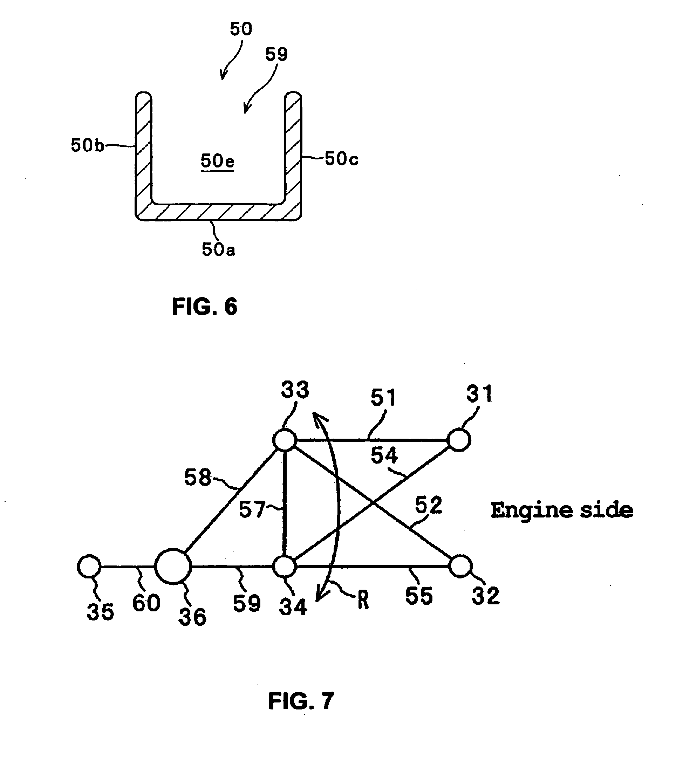

As shown in FIG. 6, the bracket 30 has a cross section formed in the shape of the letter U. Specifically, the connecting members 51, 52, 54, 55, 57, 58, 59, and 60 have a cross section formed in the shape of the letter U. Specifically, the bracket 30 is provided with a first side wall 50b, a second side wall 50c, and a bottom wall 50a as a plate-like part. The first side wall 50b and the second side wall 50c are disposed to face each other. The bottom wall 50a connects the right end of the first side wall 50b in the width direction of the vehicle to the right end of the second side wall 50c in the width direction of the vehicle. The first side wall 50b, the second side wall 50c, and the bottom wall 50a form a recess 50e that has an opening on an inner side in the width direction of the vehicle.

As shown in FIG. 4, a plurality of ribs 50d are formed in the recess 50e of the bracket 30. The ribs 50d extend from the bottom wall 50a toward an inner side in the width direction of the vehicle. The ribs 50d connect the first side wall 50b to the second side wall 50c. A plurality of the ribs 50d further improve rigidity of the bracket 30.

The ribs 50d do not necessarily need to be formed in the whole part of the recess 50e. For example, the ribs 50d may be formed only in a part in which rigidity of the bracket 30 is relatively low. For example, the ribs 50d may be provided in the intersection 68, which is subject to vibration.

Specifically, in the embodiment, a large number of the ribs 50d are formed in the first connecting member 51, the second connecting member 52, the eighth connecting member 58, and the tenth connecting member 60 of the bracket 30. On the other hand, the ribs 50d are scarcely formed in the fourth connecting member 54, the fifth connecting member 55, the seventh connecting member 57, and the ninth connecting member 59.

As a result of a strenuous research, the inventors have first found that the bracket 30 receives force in a twisting direction around the axis extending in the longitudinal direction due to vibration and/or swing of the muffler 23. As a result, the inventors conceive of the fact that rigidity of the bracket 30 can be effectively improved by improving rigidity of the bracket 30 against force in the twisting direction around the axis extending in the longitudinal direction.

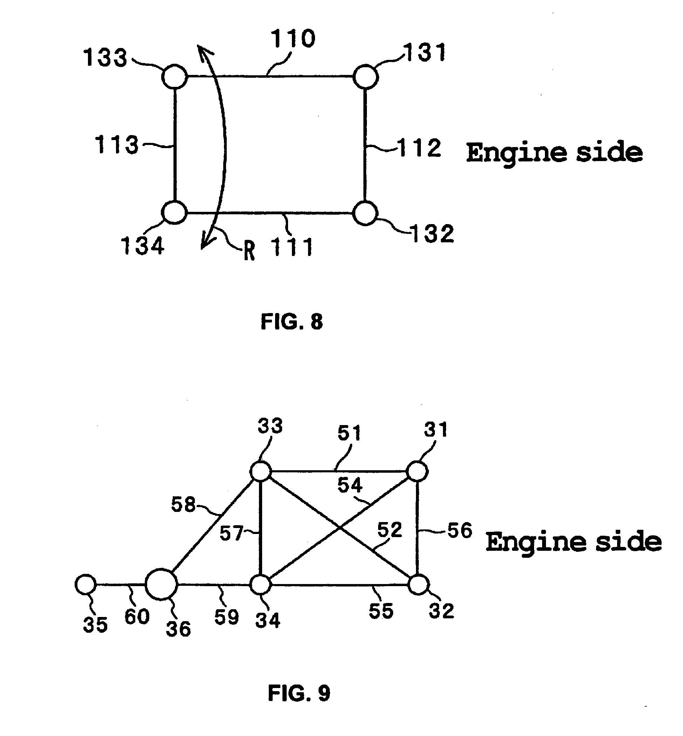

For example, as shown in FIG. 8, it is thinkable that connecting members 110, 111, 112, and 113 connect a first engine side fixing part 131 and a second engine side fixing part 132 to a first muffler side fixing part 133 and a second muffler side fixing part 134. In other words, it is thinkable that a bracket provided with an opening at a center thereof for reducing weight is used to connect the first engine side fixing part 131 and the second engine side fixing part 132 to the first muffler side fixing part 133 and the second muffler side fixing part 134.

In this case, the first muffler side fixing part 133 is connected to the first engine side fixing part 131 by the connecting member 110. However, any connecting member is not provided to directly connect the first muffler side fixing part 133 to the second engine side fixing part 132 without passing any other fixing part. Therefore, the second engine side fixing part 132 does not directly contribute to supporting the first muffler side fixing part 133. It is only the first engine side fixing part 131 that directly contributes to supporting the first muffler side fixing part 133.

On the other hand, in this embodiment, the first muffler side fixing part 33 is directly connected to both the first engine side fixing part 31 and the second engine side fixing part 32 by the first connecting member 51 and the second connecting member 52 as shown also in FIG. 7. Therefore, the first muffler side fixing part 33 is supported by both the first engine side fixing part 31 and the second engine side fixing part 32. Consequently, rigidity of the bracket 30 against the force in a twisting direction R around the axis extending in the longitudinal direction is enhanced in comparison with the case shown in FIG. 8. Therefore, it is possible to form the bracket 30 to have a relatively thin wall. In other words, according to the embodiment, rigidity of the bracket 30 is improved, and, at the same time with this, it can be attempted to reduce weight of the bracket 30. Further, as it is possible to enhance rigidity of the bracket 30, it becomes also possible to firmly fix the muffler 23.

In this embodiment particularly, the first engine side fixing part 31, the second engine side fixing part 32, the first muffler side fixing part 33, and the second muffler side fixing part 34 are disposed such that three centers arbitrarily chosen from the four fixing parts are not linearly located. Therefore, each of the first muffler side fixing part 33 and the second muffler side fixing part 34 can be fixed by the engine side fixing parts 31 and 32 in directions different from each fixing part. In other words, it is possible to support each of the first muffler side fixing part 33 and the second muffler side fixing part 34 from a plurality of directions. Therefore, it is possible to further effectively enhance rigidity of the bracket 30.

Further, as for in the case shown in FIG. 8, the second muffler side fixing part 134 is connected to the second engine side fixing part 132 by the connecting member 111. However, any connecting member is not provided to directly connect the second muffler side fixing part 134 to the first engine side fixing part 131 without passing any other fixing part. Therefore, the first engine side fixing part 131 does not directly contribute to supporting the second muffler side fixing part 134. It is only the second engine side fixing part 132 that directly contributes to supporting the second muffler side fixing part 134.

On the other hand, in this embodiment, the second muffler side fixing part 34 is directly connected to both the first engine side fixing part 31 and the second engine side fixing part 32 by the third connecting member 53 and the fourth connecting member 54 as shown also in FIG. 7. Therefore, the second muffler side fixing part 34 is supported by both the first engine side fixing part 31 and the second engine side fixing part 32. Consequently, rigidity of the bracket 30 against the force in the twisting direction R around the axis extending in the longitudinal direction is further enhanced in comparison with the case shown in FIG. 8.

In particular, the first connecting member 51, the second connecting member 52, the third connecting member 53, and the fourth connecting member 54 are provided in the embodiment. Consequently, each of the first muffler side fixing part 33 and the second muffler side fixing part 34 can be supported by both the first engine side fixing part 31 and the second engine side fixing part 32. Therefore, rigidity of the bracket 30 against the force in the twisting direction R around the axis extending in the longitudinal direction is further enhanced.

In the embodiment, as shown in FIG. 3 and FIG. 4, the second connecting member 52 and the fourth connecting member 54 are provided with the intersection 68 interconnected thereto. Therefore, it is possible to improve rigidity of the second connecting member 52 and the fourth connecting member 54 in comparison with the case that the second connecting member 52 and the fourth connecting member 54 are not interconnected. Therefore, it is possible to further enhance rigidity of the bracket 30.

In the embodiment, the first muffler side fixing part 33 and the second muffler side fixing part 34 are interconnected by the seventh connecting member 57. Therefore, rigidity of the bracket 30 against the force in the twisting direction R around the axis extending in the longitudinal direction is further improved.

For example, when the seventh connecting member 57 is not provided, the first muffler side fixing part 33 and the second muffler side fixing part 34 are not interconnectedly fixed. Therefore, positional relationship between the first muffler side fixing part 33 and the second muffler side fixing part 34 tend to vary. Therefore, the muffler 23 is easily vibrated and/or swung. As a result, large force tends to be applied to the bracket 30.

On the other hand, in this embodiment, the first muffler side fixing part 33 and the second muffler side fixing part 34 are interconnectedly fixed by the seventh connecting member 57. Therefore, the positional relationship between the first muffler side fixing part 33 and the second muffler side fixing part 34 does not easily vary. Consequently, vibration and swing of the muffler 23 are effectively suppressed. Therefore, it becomes possible to firmly fix the muffler 23, and, at the same time with this, it is possible to suppress force applied to the bracket 30.

In the embodiment, the bracket 30 is fixed on the engine 14 and, at the same time, fixed also on the axle 24. Therefore, it is possible to further firmly fix the bracket 30.

In this embodiment particularly, both ends of the bracket 30 are fixed on the engine 14 and on the axle 24. Therefore, it is possible to especially firmly fix the bracket 30.

Further, when the engine 14 is an engine of a unit swing type as in the embodiment, the bracket 30 also contributes to supporting the axle 24. Therefore, the axle 24 is supported on both sides in the width direction of the vehicle. Therefore, it is possible to reduce force applied to the axle 24 and the casing 14a in comparison with the case that the bracket 30 is not provided.

In the embodiment, the third muffler side fixing part 35 is provided as well as the first muffler side fixing part 33 and the second muffler side fixing part 34. Therefore, it is possible to further firmly fix the muffler 23 on the bracket 30. Further, the muffler 23 is supported by three points. Consequently, it is possible to reduce force applied to each fixing part resulting from vibration and/or swing of the muffler 23 in comparison with the case that the muffler 23 is supported by two points.

In this embodiment particularly, the third muffler side fixing part 35 is disposed more rearward than the axle side fixing part 36. Therefore, a relatively frontward part of the muffler 23 is supported by the first muffler side fixing part 33 and the second muffler side fixing part 34. At the same time, a relatively rearward part of the muffler 23 is supported by the third muffler side fixing part 35. In other words, it is possible to support the frontward part and the rearward part of the muffler 23. Therefore, it becomes possible to further firmly fix the muffler 23.

Further, the axle side fixing part 36 is disposed between the first muffler side fixing part 33 and the second muffler side fixing part 34 and the third muffler side fixing part 35 in the longitudinal direction. Therefor, it is possible to reduce distance between each of the first muffler side fixing part 33, the second muffler side fixing part 34, and the third muffler side fixing part 35 and a fixing part to a vehicle body side. Therefore, it becomes possible to further firmly fix the muffler 23. At the same time, it is possible to further improve rigidity of the bracket 30.

In particular, the axle side fixing part 36 is disposed such that the center C36 of the axle side fixing part 36 is located in the triangle constituted with the center C33 of the first muffler side fixing part 33, the center C34 of the second muffler side fixing part 34, and the center C35 of the third muffler side fixing part 35 in a side view. Therefore, it is possible to especially improve rigidity of the bracket 30.

In the embodiment, the bracket 30 has the cross section formed in the shape of the letter U. Therefore, it is possible to reduce weight of the bracket 30 and, at the same time, to achieve high rigidity of the bracket 30.

Further, in the embodiment, a plurality of the ribs 50d are formed in the bracket 30. Therefore, it is possible to further enhance rigidity of the bracket 30.

Further, as the ribs 50d are provided, it is possible to suppress vibration of the first to eleventh connecting members 51 to 61 in the width direction. Therefore, it is possible to suppress force applied to the bracket 30 resulting from vibration of the bracket 30. Therefore, it is possible to reduce rigidity necessary for the bracket 30 to a relatively lower level. Further, it becomes also possible to reduce noise resulting from vibration of the bracket 30.

Vibration of the bottom wall 50a is easily generated in particular in the intersection 68 of the bracket 30. Therefore, it is effective to form the ribs 50d in the intersection 68 as in the embodiment. As the ribs 50d are formed in the intersection 68, it is possible to effectively reduce rigidity necessary for the bracket 30. At the same time, it is possible to effectively suppress noise caused by the bracket 30.

In this specification, the "ribs" may be members in the shape of a plate projecting from a member surface, and, in general, the "ribs" may be formed for a purpose of reinforcing a member.

FIG. 9 is a plan view schematically expressing a bracket 30 in a first modified example. As shown in FIG. 9, a sixth connecting member 56 may be further disposed to connect the first engine side fixing part 31 to the second engine side fixing part 32 as well as the connecting members 51, 52, 53, 58, 59, and 60. As a result, it is possible to further improve rigidity of the bracket 30.

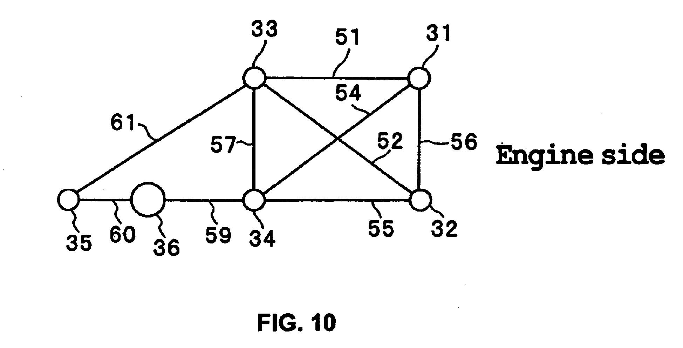

In the embodiment above, an example in which the eighth connecting member 58 is disposed to connect the first muffler side fixing part 33 to the axle side fixing part 36 is described. However, the present invention is not limited to the structure. As shown in FIG. 10, the eleventh connecting member 61 may be provided instead of the eighth connecting member 58 to connect the first muffler side fixing part 33 and the third muffler side fixing part 35. Further, the eleventh connecting member 61 may be provided in addition to the eighth connecting member 58.

In the embodiment above, an example in which each connecting member is disposed in an area enclosed by the first engine side fixing part 31, the second engine side fixing part 32, the first muffler side fixing part 33, and the second muffler side fixing part 34 in a side view is described. However, a connecting member may connect each fixing part by passing an area other than the area enclosed by the first engine side fixing part 31, the second engine side fixing part 32, the first muffler side fixing part 33, and the second muffler side fixing part 34 in a side view.

### Description of Reference Numerals and Symbols

1: motorcycle (straddle type vehicle)
10: body frame
14: engine
21: rear wheel (wheel)
23: muffler
24: axle
30: muffler fixing bracket
31: first engine side fixing part
32: second engine side fixing part
33: first muffler side fixing part
34: second muffler side fixing part
35: third muffler side fixing part
36: axle side fixing part
50a: bottom wall (plate-like part)
51: first connecting member
52: second connecting member
53: third connecting member
54: fourth connecting member
55: fifth connecting member
56: sixth connecting member
57: seventh connecting member
58: eighth connecting member
59: ninth connecting member
60: tenth connecting member
65: shared part
68: intersection

## Claims

1. A muffler fixing bracket (30) for interconnecting an engine (14) and a muffler (23) of a straddle type vehicle (1), comprising:
first and second engine side fixing parts (31, 32) adapted to be fixed to said engine (14);
a first muffler side fixing part (33) adapted to be fixed to an upper fixing part (23a) of said muffler (23);
a second muffler side fixing part (34) adapted to be fixed to a lower fixing part (23b) of said muffler (23);
a first connecting member (51) for connecting the first engine side fixing part (31) to the first muffler side fixing part (33);
a second connecting member (52) for connecting the second engine side fixing part (32) to the first muffler side fixing part (33); and
a third connecting member (53) for connecting the second muffler side fixing part (34) to at least one of the first engine side fixing part (31), the second engine side fixing part (32), the first muffler side fixing part (33), the first connecting member (51), and the second connecting member (52); wherein
the first engine side fixing part (31), the second engines side fixing part (32), the first muffler side fixing part (33), and the second muffler side fixing part (34) are disposed such that the centers thereof are in the shape of a rectangle whose interior angles are smaller than 180 degrees when viewed from the width direction of the vehicle, and
the second connecting member (52) passes through an intersection point between a first line (L2) and a second line (L3), wherein the first line (L2) passes through a center (C31) of the first engine side fixing part (31) and a center (C34) of the second muffler side fixing part (34) and the second line (L3) passes through a center (C32) of the second engine side fixing part (32) and a center (C33) of the first muffler side fixing part (33).

2. The muffler fixing bracket (30) according to claim 1, wherein the first connecting members (51) and the second connecting member (52) have a part (65) interconnectedly, shared thereby.

3. The muffler fixing bracket (30) according to claim 1 or 2, wherein at least one of the first, second and third connecting members (51, 52, 53) has a plate-like part (50a) and a rib (50d) formed to project from the plate-like part. (50a).

4. The muffler fixing bracket (30) according to claim 1, 2 or 3, wherein the third connecting member (53) includes at least one of:
a fourth connecting member (54) for connecting the first engine side fixing part (31) to the second muffler side fixing part (34); and
a fifth connecting member (55) for connecting the second engine side fixing part (32) to the second muffler side fixing part (34).

5. The muffler fixing bracket (30) according to any preceding claim, wherein the third connecting member (53) includes a fourth connecting member (54), and the second connecting member (52) and the fourth connecting member (54) form an intersection (68) crossing each other and are connected to each other at the intersection (68).

6. The muffler fixing bracket (30) according to claim 5, wherein the intersection (68) has a plate-like part (50a) and a rib (50d) formed to project from the plate-like part (50a).

7. The muffler fixing bracket (30) according to any preceding claim, further comprising a sixth connecting member (56) for connecting the first engine side fixing part (31) to the second engine side fixing part (32).

8. The muffler fixing bracket (30) according to any preceding claim, wherein the third connecting member (53) includes a seventh connecting member (57) for connecting the first muffler side fixing part (33) to the second muffler side fixing part (34).

9. The muffler fixing bracket (30) according to ant preceding claim, further comprising an axle side fixing part (36) adapted to be fixed to a vehicle wheel axle (24)

10. The muffler fixing bracket (30) according to claim 9, further comprising at least one of an eighth connecting member (58) for connecting the axle side fixing part (35) to the first muffler side fixing part (33) and a ninth connecting member (59) for connecting the axle side fixing part (36) to the second muffler side fixing part (34).

11. The muffler fixing bracket (30) according to claim 9 or 10, further comprising:
a third muffler side fixing part (35) adapted to be fixed on the muffler; and
a tenth connecting members (60) for connecting the axle side fixing part (36) to the third muffler side fixing part (35);
wherein the third muffler side fixing part (35) is disposed on a side opposite to the first and second muffler side fixing parts (33, 34) in relation to the axle side fixing part (36)

12. The muffler fixing bracket (30) according to any preceding claim, wherein at least one of the first, second and third connecting members (51, 52, 53) is formed to have as cross section in a shape of letter U.

13. The muffler fixing bracket (30) according to any preceding claim, wherein the second engine side fixing part (32) is not disposed on a line that includes a center of the first engine side fixing part (31) and a center of the first muffler side fixing part (33) or a center of the second muffle side fixing part (34).

14. A straddle type vehicle (1), comprising:
an engine (14);
a muffler (23) connected to the engine (14); and
a muffler fixing bracket (30) for interconnecting the engine (14) and the muffler (23) ;
wherein the muffler fixing bracket (30) includes:
first and second engine side fixing parts (31, 32) that are fixed on the engine (14);
a first muffler side fixing part (33) adapted to be fixed to an upper fixing part (23a) of said muffler (23);
a second muffler side fixing part (34) adapted to be fixed to a lower fixing part (23b) of said muffler (23);
a first connecting member (51) for connecting the first engine side fixing part (31) to the first muffler side fixing part (33) ;
a second connecting member (52) for connecting the second engine side fixing part (32) to the first muffler side fixing part (33); and
a third connecting member (53) for connecting the second muffler side fixing part (34) to at least one of the first engine side fixing part (31), the second engine side fixing part (32), the first muffler side fixing part (33), the first connecting member (51), and the second connecting member. (52) ); wherein
the first engine side fixing part (31), the second engine side fixing part (32), the first muffler side fixing part (33), and the second muffler side fixing part (34) are disposed such that the centers thereof are in the shape of a rectangle whose interior angles are smaller than 180 degrees when viewed from the width direction of the vehicle, and
the second connecting member (52) passes through an intersection point between a first line (L2) and a second line (L3), wherein the first line (L2) passes through a center (C31) of the first engine side fixing part (31) and a center (C34) of the second muffler side fixing part (34) and the second line (L3) passes through a center (C32) of the second engine side fixing part (32) and a center (C33) of the first muffler side fixing part (33).

15. The straddle type vehicle (1) according to claim 14, further comprising a body frame (10), wherein the engine (144) is swingably mounted on the body frame (10).

## Patentansprüche

1. Schalldämpfer-Befestigungshatterung (30), um einen Motor (14) und einen Schalldämpfer (23) eines Reitsitz-Fahrzeugs (1) miteinander zu verbinden, die Folgendes umfasst:
einen ersten und einen zweiten motorseitigen Befestigungsteil (31, 32), die dafür eingerichtet sind, an dem Motor (14) befestigt zu werden,
einen ersten schalldäinpferseitigen Befestigungsteil (33), der dafür eingerichtet ist, an einem oberen Befestigungsteil (23a) des Schalldämpfers (23) befestigt zu werden,
einen zweiten schalldämpferseitigen Befestigungsteil (34), der dafür eingerichtet ist, an einem unteren Befestigungsteil (23b) des Schalldämpfers (23) befestigt zu werden,
ein erstes Verbindungselement (51), um den ersten motorseitigen Befestigungsteil (31) mit dem ersten schalldämpferseitigen Befestigungsteil (33) zu verbinden,
ein zweites Verbindungselement (52), um den zweiten motorseitigen Befestigungsteil (32) mit dem ersten schalldämpferseitigen Befestigungsteil (33) zu verbinden, und
ein drittes Verbindungselement (53), um den zweiten motorseitigen Befestigungsteil (34) mit wenigstens einer der Komponenten erster motorseitiger Befestigungsteil (31); zweiter motorseitiger Befestigungsteil (32), erster schalldämpferseitiger Befestigungsteil (33), erstes Verbindungselement (51) und zweites Verbindungselement (52) zu verbinden, wobei
der erste motorseitige Befestigungsteil (31), der zweite motorseitige Befestigungsteil (32), der erste schalldämpferseitige Befestigungsteil (33) und der zweite schalldärnpfcrseitigc Befestigungsteil (34) derart angeordnet sind, dass die Mittelpunkte derselben die Form eines Vierecks haben, dessen Innenwinkel kleiner als 180 Grad sind, ; wenn sie aus der Breitenrichtung des Fahrzeugs betrachtet werden, und
das zweite Verbindungselement (52) durch einen Schnittpunkt zwischen einer ersten Linie (L2) und einer zweiten Linie (L3) hindurchgeht, wobei die erste Linie (L2) durch einen Mittelpunkt (C31) des ersten motorseitigen Befetigungsteils (31) und einen Mittelpunkt (C34) des zweiten schalldämpferseitigen Befestigungsteils (34) hindurchgeht und die zweite Linie (L3) durch einen Mittelpunkt (C32) des zweiten motorseitigen Befestigungsteils (32) und einen Mittelpunkt (C33) des ersten schalldämpferseitigen Befestigungsteils (33) hindurchgeht.

2. Schalldämpfer-Befestigungshalterung (30) nach Anspruch 1, wobei das erste Verbindungselement (51) und das zweite Verbindungselement (52) einen Teil (65) haben, der in wechselseitiger Verbindung durch dieselben gemeinsam genutzt wird.

3. Schalldämpfer-Befestigungshalterung (30) nach Anspruch 1 oder 2, wobei wenigstens eines von dem ersten, dem zweiten und dem dritten Verbindungselement (51, 52, 53) einen plattenartigen Teil (50a) und eine Rippe (50d), die dafür geformt ist, von dem plattenartigen Teil (50a) vorzuspringen, hat.

4. Schalldämpfer-Befestigungshalterung (30) nach Anspruch 1, 2 oder 3, wobei das dritte Verbindungselement (53) wenigstens eines der Folgenden einschließt:
ein viertes Verbindungselement (54), um den ersten motorseitigen Befestigungsteil (31) mit dem zweiten schalldämpferseitigen Befestigungsteil (34) zu verbinden, und
ein fünftes Verbindungselement (55), um den zweiten motorseitigen Befestigungsteil (32) mit dem zweiten schalldämpferseitigen Befestigungsteil (34) zu verbinden.

5. Schalldämpfer-Befestigungshalterung (30) nach einem der vorhergehenden Ansprüche, wobei das dritte Verbindungselement (53) ein viertes Verbindungselement (54) einschließt und das zweite Verbindungselement (52) und das vierte Verbindungselement (54) einander überkreuzend eine Überschneidung (68) bilden und an der Überschneidung (68) miteinander verbunden sind.

6. Schalldämpfer-Befestigungshalterung (30) nach Anspruch 5, wobei die Überschneidung (68) einen plattenartigen Teil (50a) und eine Rippe (50d), die dafür geformt ist, von dem plattenartigen Teil (50a) vorzuspringen, hat.

7. Schalldämpfer-Befestigungshalterung (30) nach einem der vorhergehenden Ansprüche, die ferner ein sechstes Verbindungselement (56) umfasst, um den ersten motorseitigen Befestigungsteil (31) mit dem zweiten motorseitigen Befestigungsteil (32) zu verbinden.

8. Schalldämpfer-Befestigungshalterung (30) nach einem der vorhergehenden Ansprüche, wobei das dritte Verbindungselement (53) ein siebentes Verbindungselement (57) einschließt, um den ersten schalldämpferseitigen Befestigungsteil (33) mit dem zweiten schalldämpferseitigen Befestigungsteil (34) zu verbinden.

9. Schalldämpfer-Befestigungshalterung (30) nach einem der vorhergehenden Ansprüche, die ferner einen achsenseitigen Befestigungsteil (36) umfasst, der dafür eingerichtet ist, an einer Fahrzeug-Radachse befestigt zu werden (24).

10. Schalldampfer-Befestigungshalterung (30) nach Anspruch 9, die ferner wenigstens ein achtes Verbindungselement (58), um den achsenseitigen Befestigungsteil (36) an dem ersten schalldämpferseitigen Befestigungsteil (33) zu befestigen und/oder ein neuntes Verbindungselement (59), um den achsenseitigen Befestigungsteil (36) an dem zweiten schalldämpferseitigen Befestigungsteil (34) zu befestigen, umfasst.

11. Schalldämpfer-Befestigungshalterung (30) nach Anspruch 9 oder 10, die ferner Folgendes umfasst:
einen dritten schalldämpferseitigen Befestigungsteil (35), der dafür eingerichtet ist, an dem Schalldämpfer befestigt zu werden, und
ein zehntes Verbindungselement (60), um den achsenseitigen Befestigungsteil (36) mit dem dritten schalldämpferseitigen Befestigungsteil (35) zu verbinden, und
wobei der dritte schalldämpferseitige Befestigungsteil (35) auf einer dem ersten und dem zweiten schalldämpferseitigen Befestigungsteil (33, 34) im Verhältnis zu dem achsenseitigen Befestigungsteil (36) entgegengesetzten Seite angeordnet ist.

12. Schalldämpfer-Befestigungshalterung (30) nach einem der vorhergehenden Ansprüche, wobei wenigstens eines von dem ersten, dem zweiten und dem dritten Verbindungselement (51, 52, 53) so geformt ist, dass es einen Querschnitt in einer Form des Buchstaben U hat.

13. Schalldämpfer-Befestigungshalterung (30) nach einem der vorhergehenden Ansprüche, wobei der zweite motorseitige Befestigungsteil (32) nicht auf einer Linie angeordnet ist, die einen Mittelpunkt des ersten motorseitigen Befestigungsteils (31) und einen Mittelpunkt des ersten schalldämpferseitigen Befestigungsteils (33) oder einen Mittelpunkt des zweiten schalldämpferseitigen Befestigungsteils (34) einschließt.

14. Reitsitz-Fahrzeug (1), das Folgendes umfasst:
einen Motor (14),
einen Schalldämpfer (23), der mit dem Motor (14) verbunden ist,
eine Schalldämpfer-Befestigungshalterung (30), um einen Motor (14) und einen Schalldämpfer (23) eines Reitsitz-Fahrzeugs (1) miteinander zu verbinden,
wobei die Schalldämpfer-Befestigungshalterung (30) folgendes einschließt:
einen ersten und einen zweiten motorseitigen Befestigungsteil (31, 32), die an dem Motor (14) befestigt sind,
einen ersten schalldampferseitigen Befestigungsteil (33), der dafür eingerichtet ist, an einem oberen Befestigungsteil (23a) des Schalldämpfers (23) befestigt zu werden,
einen zweiten schalldämpferseitigen Befestigungsteil (34), der dafür eingerichtet ist, an einem unteren Befestigungsteil (23b) des Schalldämpfers (23) befestigt zu werden,
ein erstes Verbindungselement (51), um den ersten motorseitigen Befestigungsteil (31) mit dem ersten schalldämpferseitigen Befestigungsteil (33) zu verbinden,
ein zweites Verbindungselement (52), um den zweiten motorseitigen Befestigungsteil (32) mit dem ersten schalldämpferseitigen Befestigungsteil (33) zu verbinden, und
ein drittes Verbindungselement (53), um den zweiten motorseitigen Befestigungsteil (34) mit wenigstens einer der Komponenten erster motorseitiger Befestigungsteil (31), zweiter motorseitiger Befestigungsteil (32), erster schalldämpferseitiger Befestigungsteil (33), erstes Verbindungselement (51) und zweites Verbindungselement (52) zu verbinden, wobei.
der erste motorseitige Befestigungsteil (31), der zweite motorseitige Befestigungsteil (32), der erste schalldämpferseitige Befestigungsteil (33) und der zweite schalldämpferseitige Befestigungsteil (34) derart angeordnet sind, dass die Mittelpunkte derselben die Form eines Vierecks haben, dessen Innenwinkel kleiner als 180 Grad sind, wenn sie aus der Breitenrichtung des Fahrzeugs betrachtet werden, und
das zweite Verbindungselement (52) durch einen Schnittpunkt zwischen einer ersten Linie (L2) und einer zweiten Linie (L3) hindurchgeht, wobei die erste Linie (L2) durch einen Mittelpunkt (C31) des ersten motorseitigen Befestigungsteils (31) und einen Mittelpunkt (C34) des zweiten schalldämpferseitigen Befestigungsteils (34) hindurchgeht und die zweite Linie (L3) durch einen Mittelpunkt (C32) des zweiten motorseitigen Befestigungsteils (32) und einen Mittelpunkt (C33) des ersten schalldämpferseitigen Befestigungsteils (33) hindurchgeht.

15. Reitsitz-Fahrzeug (1) nach Anspruch 14, das ferner einen Aufbaurahmen (10) umfasst, wobei der Motor (14) schwenkbar an dem Aufbaurahmen (10) angebracht ist.

## Revendications

1. Support de fixation de silencieux (30) pour interconnecter un moteur (14) et un silencieux (23) d'un véhicule du type à enfourcher (1), comprenant:
des première et deuxième parties de fixation du côté du moteur (31, 32), adaptées pour être fixées sur ledit moteur (14) ;
une première partie de fixation du côté du silencieux (33), adaptée pour être fixée sur une partie de fixation supérieure (23a) dudit silencieux (23) ;
une deuxième partie de fixation du côté du silencieux (34), adaptée pour être fixée sur une partie de fixation inférieure (23b) dudit silencieux (23) ;
un premier élément de connexion (51), pour connecter la première partie de fixation du côté du moteur (31) à la première partie de fixation du côté du silencieux (33) ;
un deuxième élément de connexion (52), pour connecter la deuxième partie de fixation du côté du moteur (32) à la première partie de fixation du côté du silencieux (33) ; et
un troisième élément de connexion (53), pour connecter la deuxième partie de fixation du côté du silencieux (34) à au moins une partie, la première partie de fixation du côté du moteur (31), la deuxième partie de fixation du côté du moteur (32), la première partie de fixation du côté du silencieux (33), le premier élément de connexion (51) ou le deuxième élément de connexion (52) ; dans lequel
la première partie de fixation du côté du moteur (31), la deuxième partie de fixation du côté du moteur (32), la première partie de fixation du côté du silencieux (33) et la deuxième partie de fixation du côté du silencieux (34) sont agencées de sorte que leurs centres ont la forme d'un rectangle dont les angles internes sont inférieurs à 180 degrés, vus dans la direction de la largeur du véhicule; et
le deuxième élément de connexion (52) passe à travers un point d'intersection entre une première ligne (L2) et une deuxième ligne (L3), la première ligne (L2) traversant un centre (C31) de la première partie de fixation du côté du moteur (31) et un centre (C34) de la deuxième partie de fixation du côté du silencieux (34), la deuxième ligne (L3) traversant un centre (C32) de la deuxième partie de fixation du côté du moteur (32) et un centre (C33) de la première partie de fixation du côté du silencieux (33).

2. Support de fixation de silencieux (30) selon la revendication 1, dans lequel le premier élément de connexion (51) et le deuxième élément de connexion (52) comportent une partie (65) qu'ils partagent par interconnexion.

3. Support de fixation de silencieux (30) selon les revendications 1 ou 2, dans lequel au moins un des premier, deuxième et troisième éléments de connexion (51, 52, 53) comporte une partie en forme de plaque (50a) et une nervure (50d) formée de sorte à déborder de la partie en forme de plaque (50a).

4. Support de fixation de silencieux (30) selon les revendications 1, 2 ou 3, dans lequel le troisième élément de connexion (53) englobe au moins un des éléments ci-dessous :
un quatrième élément de connexion (54), pour connecter la première partie de fixation du côté du moteur (31) à la deuxième partie de fixation du côté du silencieux (34) ; et
un cinquième élément de connexion (55), pour connecter la deuxième partie de fixation du côté du moteur (32) à la deuxième partie de fixation du côté du silencieux (34).

5. Support de fixation de silencieux (30) selon l'une quelconque des revendications précédentes, dans lequel le troisième élément de connexion (53) englobe un quatrième élément de connexion (54), le deuxième élément de connexion (52) et le quatrième élément de connexion (54) formant une intersection (68) se croisant mutuellement et étant connectés l'un à l'autre au niveau de l'intersection (68).

6. Support de fixation de silencieux (30) selon la revendication 5, dans lequel l'intersection (68) comporte une partie en forme de plaque (50a) et une nervure (50d) formée de sorte à déborder de la partie en forme de plaque (50a).

7. Support de fixation de silencieux (30) selon l'une quelconque des revendications précédentes, comprenant en outre un sixième élément de connexion (56) pour connecter la première partie de fixation du côté du moteur (31) à la deuxième partie de fixation du côté du moteur (32).

8. Support de fixation de silencieux (30) selon l'une quelconque des revendications précédentes, dans lequel le troisième élément de connexion (53) englobe un septième élément de connexion (57) pour connecter la première partie de fixation du côté du silencieux (33) à la deuxième partie de fixation du côté du silencieux (34).

9. Support de fixation de silencieux (30) selon l'une quelconque des revendications précédentes, comprenant en outre une partie de fixation du côté de l'essieu (36), adaptée pour être fixée sur un essieu de roue d'un véhicule (24).

10. Support de fixation de silencieux (30) selon la revendication 9, comprenant en outre au moins un élément, un huitième élément de connexion (58), pour connecter la partie de fixation du côté de l'essieu (36) à la première partie de fixation du côté du silencieux (33), ou un neuvième élément de connexion. (59), pour connecter la partie de fixation du côté de l'essieu (36) à la deuxième partie de fixation du côté du silencieux (34).

11. Support de fixation de silencieux (30) selon les revendications 9 ou 10, comprenant en outre :
une troisième partie de fixation du côté du silencieux (35), adaptée pour être fixée sur le silencieux ; et
un dixième élément de connexion (60), pour connecter la partie de fixation du côté de l'essieu (36) à la troisième partie de fixation du côté du silencieux (35) ;
la troisième partie de fixation du côté du silencieux (35) étant agencée sur un côté opposé aux première et deuxième parties de fixation du côté du silencieux (33, 34) par rapport à la partie de fixation du côté de l'essieu (36).

12. Support de fixation de silencieux (30) selon l'une quelconque des revendications précédentes, dans lequel au moins un des premier, deuxième et troisième éléments de connexion (51, 52, 53) est formé de sorte à avoir une section transversale en forme d'une lettre U.

13. Support de fixation de silencieux (30) selon l'une quelconque des revendications précédentes, dans lequel la deuxième partie de fixation du côté du moteur (32) n'est pas agencée sur une ligne englobant un centre de la première partie de fixation du côté du moteur (31) et un centre de la première partie de fixation du côté du silencieux (33) ou un centre de la deuxième partie de fixation du côté du silencieux (34).

14. Véhicule du type à enfourcher (1), comprenant:
un moteur (14);
un silencieux (23) connecté au moteur (14) ; et
un support de fixation du silencieux (30) pour interconnecter le moteur (14) et le silencieux (23) ;
le support de fixation du silencieux (30) englobant :
des première et deuxième parties de fixation du côté du moteur (31, 32), adaptées pour être fixées sur ledit moteur (14) ;
une première partie de fixation du côté du silencieux (33), adaptée pour être fixée sur une partie de fixation supérieure (23a) dudit silencieux (23) ;
une deuxième partie de fixation du côté du silencieux (34), adaptée pour être fixée sur une partie de fixation inférieure (23b) dudit silencieux (23) ;
un premier élément de connexion (51), pour connecter la première partie de fixation du côté du moteur (31) à la première partie de fixation du côté du silencieux (33) ;
un deuxième élément de connexion (52), pour connecter la deuxième partie de fixation du côté du moteur (32) à la première partie de fixation du côté du silencieux (33) ; et
un troisième élément de connexion (53), pour connecter la deuxième partie de fixation du côté du silencieux (34) à au moins une partie, la première partie de fixation du côté du moteur (31), la deuxième partie de fixation du côté du moteur (32), la première partie de fixation du côté du silencieux (33), le premier élément de connexion (51) ou le deuxième élément de connexion (52) ; dans lequel
la première partie de fixation du côté du moteur (31), la deuxième partie de fixation du côté du moteur (32), la première partie de fixation du côté du silencieux (33) et la deuxième partie de fixation du côté du silencieux (34) sont agencées de sorte que leurs centres ont la forme d'un rectangle dont les angles internes sont inférieurs à 180 degrés, vus dans la direction de la largeur du véhicule ; et
le deuxième élément de connexion (52) passe à travers un point d'intersection entre une première ligne (L2) et une deuxième ligne (L3), la première ligne (L2) traversant un centre (C31) de la première partie de fixation du côté du moteur (31) et un centre (C34) de la deuxième partie de fixation du côté du silencieux (34), la deuxième ligne (L3) traversant un centre (C32) de la deuxième partie de fixation du côté du moteur (32) et un centre (C33) de la première partie de fixation du côté du silencieux (33).

15. Véhicule du type à enfourcher (1) selon la revendication 14, comprenant en outre une ossature de carrosserie (10), le moteur (14) étant monté de manière pivotante sur l'ossature de la carrosserie (10).
